# EUROPÄISCHE PATENTSCHRIFT

(11) **EP 1 309 804 B1**
(45) Veröffentlichungstag und Bekanntmachung des Hinweises auf die Patenterteilung: **16.11.2005**
(21) Anmeldenummer: 00983289.0
(22) Anmeldetag: 12.12.2000
(51) Int. Cl.: F16B 5/06

(54) **KUNSTSTOFFKLAMMER ZUR LÖSBAREN VERBINDUNG EINER VERKLEIDUNGSPLATTE MIT EINEM TRÄGERTEIL**
PLASTIC CLIP FOR THE DETACHABLE CONNECTION OF A TRIM PLATE TO A SUPPORT PIECE
AGRAFE PLASTIQUE DESTINEE A LA FIXATION DETACHABLE D'UN PANNEAU DE GARNITURE SUR UNE PARTIE SUPPORT

(30) Priorität: 29.12.1999 DE 19963721
(43) Veröffentlichungstag der Anmeldung: 14.05.2003
(73) Patentinhaber: A. Raymond & Cie, 38028 Grenoble (FR)
(72) Erfinder: BOVILLE, Daniel, F-75020 Paris (FR)
(74) Vertreter: Rüttgers, Joachim
(86) Internationale Anmeldenummer: PCT/EP2000/012561
(87) Internationale Veröffentlichungsnummer: WO 2001/050026

(56) Entgegenhaltungen:
- WO-A-99/20907
- DE-A- 4 330 102
- US-A- 4 810 147

## Beschreibung

Die Erfindung bezieht sich auf eine Kunststoffklammer zur lösbaren Verbindung einer Verkleidungsplatte mit einem Trägerteil, insbesondere mit dem Türrahmen einer Fahrzeugkarosserie. Die Klammer besteht hierbei aus einem Kopfteil und einem Ankerfuß, welcher in eine Öffnung des Trägerteils einsteckbar ist, sowie einem an der Verkleidungsplatte zu befestigenden Oberteil, welches mit dem Kopfteil druckknopfartig verbindbar ist.

Eine solche Klammer ist beispielsweise aus DE 43 30 102 C2 bekannt. Bei dieser Klammer wird es als Nachteil angesehen, daß das Kopfteil mit dem Ankerfuß einstückig und somit starr verbunden ist. Dadurch ist es mit dieser Klammer unmöglich, Toleranzabweichungen zwischen den Befestigungsstellen an der Verkleidungsplatte und den Befestigungsöffnungen imTrägerteil auszugleichen, sofern das Oberteil starr an der Verkleidungsplatte befestigt ist.

Um diesen Nachteil zu vermeiden, ist die Kunststoffklammer erfindungsgemäß so ausgebildet, daß das Kopfteil die Form eines offenen Zylindertopfes besitzt und eine zentrale Bohrung aufweist, an dessen Rand schräg nach innen abstehende Stützabschnitte angeformt sind, und daß über dem Ankerfuß ein Stützteller vorgesehen ist, über den sich ein T-förmiger Haltebolzen erhebt, dessen Kopf so bemessen ist, daß dieser durch die zentrale Bohrung unter elastischer Aufweitung der Stützabschnitte eindrückbar ist, wobei die Abschnitte nach dem Hindurchtreten des Bolzenkopfes wieder zusammenfedern und sich an dessen Unterseite abstützen.

Hierbei ist es aus gießtechnischen Gründen zweckmäßig, wenn der Kopf des Haltebolzens am oberen Rand mit dem unteren Rand der zentralen Bohrung über dünne Stege abreißbar verbunden ist. Damit läßt sich die an sich zweiteilige Klammer vorteilhaft in einer Gießform abspritzen und anschließend durch Einschlagen des Haltekopfes in die zentrale Bohrung des Kopfteils zu einer Klammer zusammenfügen mit dem weiteren Vorteil, daß der Kopf des Haltebolzens gegenüber den Kanten der Stützabschnitte zum Toleranzausgleich radial verschiebbar ist.

Das mit dem Kopfteil druckknopfartig verbindbare Oberteil wird beim Stand der Technik üblicherweise in einer schlüssellochartigen Tasche eingesetzt, welche an der Verkleidungsplatte angeformt ist. Da jedoch der Toleranzausgleich zwischen dem Kopfteil und dem Haltebolzen über dem Ankerfuß stattfindet, ist es nach einem weiteren Merkmal der Erfindung zweckmäßig und fertigungstechnisch ohne weitere machbar, das Oberteil direkt in der Verkleidungsplatte zu integrieren.

Ein Ausführungsbeispiel der Erfindung ist in der Zeichnung dargestellt und soll nachfolgend näher erläutert werden. Es zeigt
- Fig. 1: Die Kunststoffklammer im Anlieferungszustand unterhalb eines an der Verkleidungsplatte angeformten Oberteils in Seitenansicht,
- Fig. 2: die gleiche Kunststoffklammer mit Oberteil im Schnitt nach der Linie II - II in Fig. 1,
- Fig. 3: die gleiche Klammer im zusammengefügten Zustand mit aufgedrücktem Oberteil oberhalb der Öffnung des Trägerteils,
- Fig. 4: die gleiche Klammer nach dem Einsetzen in die Öffnung und anschließendem Ausbau des Oberteils und
- Fig. 5: drei Beispiele für die radiale Verschiebbarkeit des Kopfteils zum a bis c Haltebolzen bei der zusammengesetzten Klammer

Die in den Figuren dargestellte Kunststoffklammer besteht im wesentlichen aus einem Kopfteil **1,** einem Ankerfuß **2** und einem Oberteil **3,** welches an einer Verkleidungsplatte **6** befestigt und mit dem Kopfteil **1** druckknopfartig verbindbar ist.

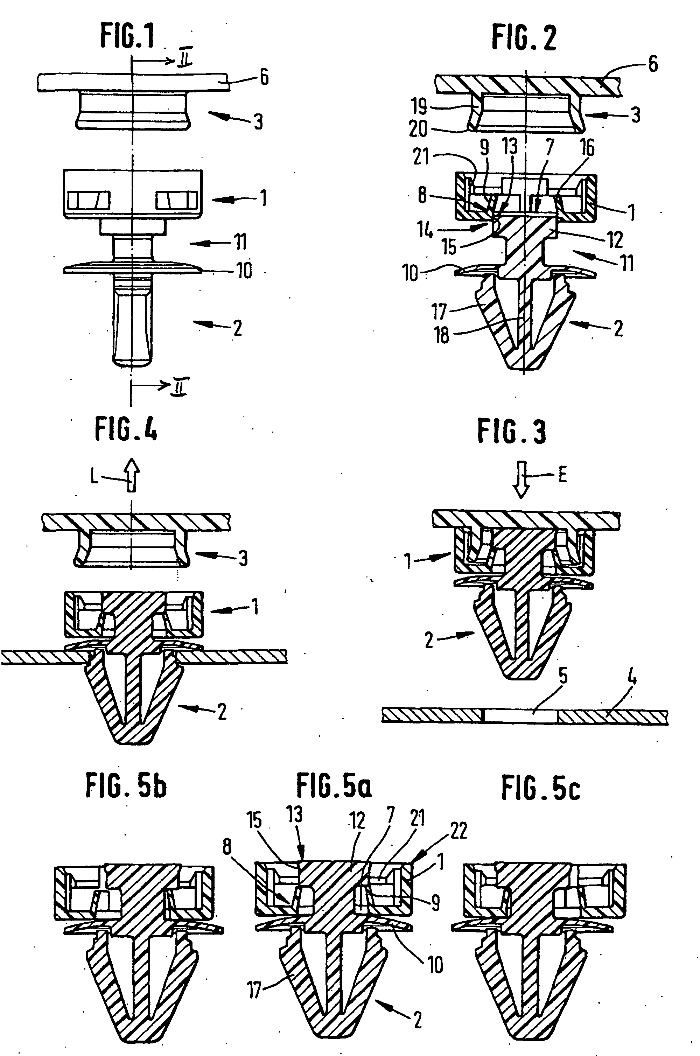

Wie insbesondere aus **Figur 2** erkennbar, ist der Ankerfuß **2** aus zwei federnd zusammendrückbaren Stützbeinen **17** gebildet, die über einen mittigen Steg **18** mit einem schirmartigen Stützteller **10** verbunden und in eine Öffnung **5** eines Trägerteils **4** einsteckbar sind. Sobald der Stützteller **10** auf dem Trägerteil **4** aufliegt und die Stützbeine **17** die Öffnung **5** des Trägerteils **4** passiert haben, federn diese wieder auseinander und legen sich in bekannter Weise auf dem rückwärtigen Rand der Öffnung **5** an. Als Trägerteil **4** können hierbei irgend welche Platten, insbesondere aber der Türrahmen einer Fahrzeugkarosserie Verwendung finden.

Das Kopfteil **1** besitzt die Form eines offenen Zylindertopfes und weist eine zentrale Bohrung **7** auf, an dessen oberen Rand **8** schräg nach innen abstehende, dem Randbogen folgende Stützabschnitte **9** angeformt sind. Über dem Stützteller **10** erhebt sich ein T-förmig ausgebildeter Haltebolzen **11,** dessen Kopf **12** so bemessen ist, daß dieser durch die zentrale Bohrung **7** unter elastischer Aufweitung der Stützabschnitte **9** eindrückbar ist.

Hierbei ist der Kopf **12** des Haltebolzens **11** im vorliegenden Ausführungsbeispiel an seinem oberen Rand **13** mit dem unteren Rand **14** der zentralen Bohrung **7** über mehrere, auf dem Umfang gleichmäßig verteilte Stege **15** abreißbar verbunden. Dadurch sind das Kopfteil **1** und der Ankerfuß **2** von der Herstellung bis zur Anlieferung einstückig miteinander verbunden (**Fig.2**) und werden erst beim Hersteller der Verkleidungsplatte **6** beim Aufdrücken des Oberteils **3** unter elastischer Aufweitung der Stützabschnitte **9** zusammengedrückt (**Fig.3**), wobei die Abschnitte **9** nach dem Hindurchtreten des Bolzenkopfes **12** wieder zusammenfedern und sich ihren Kanten **16** an dessen Unterseite abstützen.

Wie aus den **Fig. 5 a bis c** ersichtlich, ist der Kopf **12** des Haltebolzens **11** im eingedrückten Zustand gegenüber den Kanten **16** der Stützabschnitte **9** radial verschiebbar, so daß der Ankerfuß **2** beim Einstecken in die Öffnung **5** des Trägerteils **4** sich problemlos in die richtige Lage ausrichten kann.

Das Oberteil. **3** ist im vorliegenden Ausführungsbeispiel in der Verkleidungplatte **6** integriert, d.h. einstückig angeformt und besteht aus einem Ring **19,** dessen Rand **20** leicht nach außen gerichtet ist. Dementsprechend besitzt das Kopfteil **1** an seinem oberen Rand **22** über den Umfang verteilt mindestens drei nach innen abstehende Rastnasen **21,** die mit dem Rand **20** druckknopfartig zusammenwirken.

**Figur 3** zeigt die Kunststoffklammer in zusammengefügtem Zustand mit dem aufgedrückten Oberteil **3** vor dem Eindrücken des Ankerfußes **2** in Pfeilrichtung "E" in die Öffnung **5** des Trägerteils **4. Figur 4** zeigt die im Trägerteil **4** fest verankerte Kunststoffklammer nach dem Lösen des Oberteils **3** in Pfeilrichtung "L", während der Ankerfuß **2** in der Öffnung **5** des Trägerteils **4** verbleibt.

### Bezugszeichenliste

- 1: Kopfteil
- 2: Ankerfuß
- 3: Oberteil
- 4: Trägerteil
- 5: Öffnung
- 6: Verkleidungsplatte
- 7: Zentrale Bohrung
- 8: oberer Bohrungsrand
- 9: Stützabschnitte
- 10: Stützteller
- 11: Haltebolzen
- 12: Kopf
- 13: oberer Kopfrand
- 14: unterer Bohrungsrand
- 15: abreißbare Stege
- 16: Kanten der Stützabschnitte
- 17: Stützbeine
- 18: mittiger Steg
- 19: Ring (des Oberteils)
- 20: Rand
- 21: Rastnasen
- 22: Oberer Rand (des Kopfteils)

## Patentansprüche

1. Kunststoffklammer zur lösbaren Verbindung einer Verkleidungsplatte mit einem Trägerteil, bestehend aus einem Kopfteil (1) und einem Ankerfuß (2), welcher in eine Öffnung (5) des Trägerteils (4) einsteckbar ist, sowie einem an der Verkleidungsplatte (6) zu befestigenden Oberteil (3), welches mit dem Kopfteil (1) druckknopfartig verbindbar ist, **dadurch gekennzeichnet, daß** das Kopfteil (1) die Form eines offenen Zylindertopfes besitzt und eine zentrale Bohrung (7) aufweist, an dessen Rand (8) schräg nach innen abstehende Stützabschnitte (9) angeformt sind, und daß über dem Ankerfuß (2) ein Stützteller (10) vorgesehen ist, über den sich ein T-förmiger Haltebolzen (11) erhebt, dessen Kopf (12) so bemessen ist, daß dieser durch die zentrale Bohrung (7) unter elastischer Aufweitung der Stützabschnitte (9) eindrückbar ist, wobei die Abschnitte (9) nach dem Hindurchtreten des Bolzenkopfes (12) wieder zusammenfedern und sich an dessen Unterseite abstützen.

2. Kunststoffklammer nach Anspruch 1, **dadurch gekennzeichnet, daß** der Kopf (12) des Haltebolzens (11) am oberen Rand (13) mit dem unteren Rand (14) der zentralen Bohrung (7) über dünne Stege (15) abreißbar verbunden ist.

3. Kunststoffklammer nach Anspruch 1 oder 2, **dadurch gekennzeichnet, daß** der Kopf (12) des Haltebolzens (11) im eingedrückten Zustand gegenüber den Kanten (16) der Stützabschnitte (9) radial verschiebbar ist.

4. Kunststoffklammer nach einem der Ansprüche 1 bis 3, **dadurch gekennzeichnet, daß** das Oberteil (3) direkt in der Verkleidungsplatte (6) integriert ist.

5. Kunststoffklammer nach Anspruch 4, **dadurch gekennzeichnet, daß** das Oberteil (3) aus einem Ring (19) besteht, dessen Rand (20) leicht nach außen gerichtet ist, und das Kopfteil (1) an seinem gegenüberliegenden Rand (22) über den Umfang verteilt mindestens drei nach innen abstehende Rastnasen (21) aufweist, die mit dem Rand (20) druckknopfartig zusammenwirken.

## Claims

1. Plastics clip for detachable connection of a trim plate to a support member, comprising a head member (1) and an anchor foot (2) which is insertable into an opening (5) in the support member (4), and an upper member (3) to be attached to the trim plate (6), which is connectable to the head member (1) in the manner of a push button, **characterised in that** the head member (1) has the form of an open cylindrical pot and has a central bore (7) on whose edge (8) support pieces (9) are formed projecting obliquely inwardly, and that above the anchor foot (2) a support plate (10) is provided, above which rises a T-shaped retaining pin (11) whose head (12) is dimensioned that it may be pushed through the central bore (7), spreading the support pieces (9) elastically, whereby the support pieces (9) spring together again after passage of the head (12) of the pin and rest against its underside.

2. Plastics clip according to claim 1, **characterised in that** the head (12) of the retaining pin (11) is attached at its upper edge (13) to the lower edge (14) of the central bore (7) via thin webs (15) such that it can be torn off.

3. Plastics clip according to claim 1 or 2, **characterised in that**, in its pushed in condition, the head (12) of the retaining pin (11) is radially displaceable relative to the edges (16) of the support pieces (9).

4. Plastics clip according to one of the claims 1 to 3, **characterised in that** the upper member (3) is directly integrated into the trim plate (6).

5. Plastics clip according to claim 4, **characterised in that** the upper member (3) comprises a ring (19) whose edge (20) is directed slightly outwardly, and the head member (1) has at least three inwardly projecting latching noses (21) distributed over the periphery of its opposing edge (22), said latching noses cooperating with the edge (20) in the manner of a push button.

## Revendications

1. Agrafe en matière plastique servant à assembler, avec une possibilité de démontage ultérieur, un panneau d'habillage avec un élément formant support, se composant d'un élément formant tête (1) et d'une patte d'ancrage (2) qui est destinée à être insérée dans une ouverture (5) ménagée à cet effet dans l'élément formant support (4), ainsi que d'un élément de recouvrement supérieur (3) devant être fixé sur le panneau d'habillage (6), qui est destiné à être assemblé avec l'élément formant tête (1) selon le principe du bouton-pression, **caractérisée en ce que** l'élément formant tête (1) a la forme d'un pot cylindrique ouvert et comporte une ouverture centrale (7) au niveau du bord (8) de laquelle des segments d'appui (9) faisant saillie vers l'intérieur sont réalisés solidaires par moulage et ne ce qu'il est prévu au-dessus de la patte d'ancrage (2) une coupelle d'appui (10) au-dessus de laquelle se dresse un tourillon de retenue en forme de T (11), dont la tête (12) est dimensionnée dans des conditions telles que celle-ci peut être emmanchée par un effort de pression dans l'ouverture centrale (7) en forçant au passage les segments d'appui (9) à s'écarter par cédage élastique, ces segments (9) reprenant en l'occurrence leur position initiale par retour élastique une fois la tête (12) du tourillon complètement emmanchée et venant prendre appui contre la face inférieure de celui-ci.

2. Agrafe en matière plastique selon la revendication 1, **caractérisée en ce que** la tête (12) du tourillon de retenue (11) est raccordée eu niveau de son bord supérieur (13) au bord inférieur (14) de l'ouverture centrale (7) par l'intermédiaire de minces pontets (15) dissociables par arrachement.

3. Agrafe en matière plastique selon la revendication 1 ou 2, **caractérisée en ce que** la tête (12) du tourillon de retenue (11) peut, dans sa position d'assemblage, être déplacée dans le plan radial par rapport aux arêtes (16) des segments d'appui (9).

4. Agrafe en matière plastique selon l'une des revendications 1 à 3, **caractérisée en ce que** l'élément de recouvrement supérieur (3) est directement intégré dans le panneau d'habillage (6).

5. Agrafe en matière plastique selon la revendication 4, **caractérisée en ce que** l'élément de recouvrement supérieur (3) se compose d'un anneau (19) dont le bord (20) est légèrement orienté vers l'extérieur et **en ce que** l'élément formant tête (1) comporte, au niveau de son bord diamétralement opposé (22), au moins trois ergots d'accrochage (21) faisant saillie vers l'intérieur, répartis de manière équidistante sur la périphérie, qui opèrent en interaction d'encastrement selon le principe du bouton-pression avec le bord (20).
